# EUROPÄISCHE PATENTANMELDUNG

(11) **EP 3 441 654 A1**
(43) Veröffentlichungstag der Anmeldung: **13.02.2019**
(21) Anmeldenummer: 18179201.1
(22) Anmeldetag: 22.06.2018
(51) Int. Cl.: F16L 11/18, F16G 13/16, H02G 3/04

(54) **FÜHRUNGSROHR**

(30) Priorität: 10.08.2017 DE 102017118245
(71) Anmelder: Murrplastik Systemtechnik GmbH, 71570 Oppenweiler (DE)
(72) Erfinder: Bier Dr., Klaus-Dieter, 71397 Leutenbach (DE); Herrmann, Steffen, 71554 Weissach (DE); Rothenhöfer, Horst, 74348 Lauffen (DE)
(74) Vertreter: Patentanwälte Bregenzer und Reule Partnerschaftsgesellschaft mbB

(57) **Zusammenfassung**

Die Erfindung betrifft ein Führungsrohr (10) zur Führung von Leitungen mit einer Vielzahl von gelenkig miteinander verbundenen Rohrsegmenten (14), die einen Führungskanal (20) zur Aufnahme der Leitungen umschließen, wobei jeweils zwei in einer Rohrlängsrichtung (12) aufeinander folgende Rohrsegmente (14) mittels eines Kugelgelenks (16) miteinander verbunden sind, wobei jedes Rohrsegment (14) einen Gelenkkopf (24), einen den Gelenkkopf (24) tragenden Gelenkhals (25) sowie eine Gelenkpfanne (30) zur Aufnahme des Gelenkkopfs (24) des in Rohrlängsrichtung (12) folgenden Rohrsegments (14) aufweist und wobei der Durchmesser des Gelenkkopfs (24) jeweils größer ist als der Durchmesser des ihn tragenden Gelenkhalses (25). Erfindungsgemäß ist vorgesehen, dass jedes Rohrsegment (14) ein den Gelenkkopf (24), den Gelenkhals (25) und eine den Führungskanal (20) abschnittsweise umschließende Außenschale (22) aufweisendes Schalenteil (18) und ein im Schalenteil (18) aufgenommenes und lösbar an ihm fixiertes, die Gelenkpfanne (30) aufweisendes Innenteil (28) aufweist und dass das Innenteil (28) eine Einführöffnung (34) aufweist, deren Durchmesser kleiner ist als der Durchmesser des Gelenkkopfs (24) und durch die der Gelenkhals (25) des folgenden Rohrsegments (14) in der Rohrlängsrichtung (12) durchgeführt ist.

## Beschreibung

Die Erfindung betrifft ein Führungsrohr gemäß Oberbegriff des Anspruchs 1.

Ein solches aus einer Vielzahl von gelenkig miteinander verbundenen Rohrsegmenten aufgebautes Führungsrohr ist beispielsweise aus der EP 1 616 376 B1 bekannt. Die Rohrsegmente des dort beschriebenen Führungsrohrs sind mittels Kugelgelenken miteinander verbunden, die etwa in der Mitte des Führungskanals angeordnet sind. Beim Zusammenfügen oder Trennen der einzelnen Rohrsegmente werden die Gelenkköpfe in bzw. außer Eingriff mit den Gelenkpfannen gebracht, indem sie in einer Richtung bewegt werden, die quer zur Rohrlängsrichtung verläuft, und in die die Öffnung der Kugelpfannen zeigt. Zu diesem Zweck sind die Gelenkköpfe an abgewinkelten Gelenkhälsen angeordnet. Diese Maßnahme ermöglicht zwar in Rohrlängsrichtung hohe Zugkräfte bei gleichzeitiger erleichterter Zusammenfügung und/oder Demontage. Quer auf das Führungsrohr einwirkende Kräfte können aber dazu führen, dass sich einzelne Rohrsegmente voneinander lösen. Zudem können die abgewinkelten Gelenkhälse bei starker Zugbeanspruchung abknicken.

Es ist daher Aufgabe der Erfindung, ein Führungsrohr der eingangs genannten Art derart weiterzubilden, dass es im Betrieb stabiler ist.

Diese Aufgabe wird erfindungsgemäß durch ein Führungsrohr mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, durch den zweiteiligen Aufbau der Rohrsegmente aus Schalenteil und Innenteil eine Möglichkeit zu schaffen, aufeinander folgende Rohrsegmente einerseits zuverlässig zu verbinden, so dass ihre Verbindung den im Betrieb auftretenden Zugkräften Stand hält, und andererseits eine einfache Montage des Führungsrohrs zu ermöglichen. Indem das Innenteil eine Einführöffnung aufweist, deren Durchmesser kleiner ist als der Durchmesser des Gelenkkopfs, wird der Gelenkkopf des folgenden Rohrsegments in der Gelenkpfanne festgehalten. Durch die Einführöffnung ist der Gelenkhals des folgenden Rohrsegments in der Rohrlängsrichtung durchgeführt, so dass auf das Führungsrohr wirkende Zugkräfte den Gelenkhals überwiegend in seiner Längsrichtung beanspruchen und kaum in einer Querrichtung, in die der Gelenkhals abknicken kann.

Um einerseits jeden Gelenkkopf in der zugehörigen Gelenkpfanne zuverlässig festzuhalten und andererseits eine einfache Montage und Demontage des Führungsrohrs zu ermöglichen, sind im Wesentlichen zwei Ausführungsformen denkbar.

Gemäß einer ersten Ausführungsform sind die Innenteile jeweils starr. Ein Herausziehen des Gelenkkopfs aus dem zugehörigen Innenteil ist dann nur bei Zerstörung des Letzteren möglich. Zur Herstellung eines solchen Führungsrohrs kommt insbesondere ein Verfahren in Betracht, bei dem in einem ersten Verfahrensschritt Abschnitte des Führungsrohrs bestehend aus dem Innenteil eines ersten Rohrsegments und dem Schalenteil eines in Rohrlängsrichtung folgenden zweiten Rohrsegments hergestellt werden. Dies erfolgt dadurch, dass der Gelenkkopf des zweiten Rohrsegments in einem Spritzgussprozess mit einem das Innenteil des ersten Rohrsegments bildenden Kunststoff unter Ausbildung eines der Kugelgelenke umspritzt wird. In einem zweiten Verfahrensschritt werden dann die Abschnitte durch Einsetzen der Innenteile in die Schalenteile und Fixieren der Innenteile an den Schalenteilen zusammengesetzt. Zweckmäßig bestehen auch die Schalenteile aus Kunststoff und sind insbesondere mittels eines Spritzgussprozesses gefertigt. Dabei wird bevorzugt, dass der die Innenteile bildende Kunststoff einen niedrigeren Schmelzpunkt aufweist als der Kunststoff, aus dem die Gelenkköpfe gefertigt sind, um ein stoffschlüssiges Verbinden der Innenteile mit den Gelenkköpfen beim Herstellungsprozess, das die freie Drehbarkeit der Gelenkköpfe in den Gelenkpfannen einschränken würde, zu verhindern. Weiter wird bevorzugt, dass die Innenteile zumindest überwiegend aus Polyoxymethylen, ggf. mit einer Verstärkung aus Glasfasern, Glaskugeln oder Kohlefasern, hergestellt werden und dass die Gelenkköpfe und zweckmäßig auch die Gelenkhälse und die die Außenschale mit dem Gelenkhals verbindende Stützstrebe zumindest überwiegend aus einem Polyamid, vorzugsweise aus PA66, hergestellt werden und ebenfalls vorzugsweise mittels Glasfasern verstärkt sein können. Zudem können reibungsmindernde Stoffe zugesetzt werden.

Gemäß einer zweiten vorteilhaften Ausführungsform sind die Einführöffnungen jeweils zum Ein- und Ausführen des Gelenkkopfs des folgenden Rohrsegments aufweitbar und die Innenteile sind jeweils in einer Aufnahmepartie des zugehörigen Schalenteils aufgenommen, die eine Aufweitung der Einführöffnung hemmt. So lange das Innenteil in der Aufnahmepartie des zugehörigen Schalenteils aufgenommen ist, kann der Gelenkkopf des folgenden Rohrsegments dann nicht durch die Einführöffnung herausgezogen werden. Weiter wird bevorzugt, dass die Innenteile jeweils einen nach außen überstehenden, eine in Rohrlängsrichtung weisende Stirnseite der Aufnahmepartie hintergreifenden Rand aufweisen. Der Anschlag des Rands an der Stirnseite begrenzt dann eine Bewegung des Innenteils bezüglich des Schalenteils entgegen der Rohrlängsrichtung.

Gemäß einem ersten bevorzugten Ausführungsbeispiel weisen die Innenteile jeweils sich von der Gelenkpfanne aus in Rohrlängsrichtung erstreckende, die Einführöffnung für den zugehörigen Gelenkkopf rings umschließende, elastisch biegsame Zungen auf. Ein Einfügen bzw. Herausziehen des Gelenkkopfs in die bzw. aus der Gelenkpfanne erfolgt dann einfach dadurch, dass die Zungen unter Aufweitung der Einführöffnung auseinandergebogen werden, wenn das Innenteil nicht im Schalenteil aufgenommen ist. Dabei wird bevorzugt, dass die Zungen mit ihren der Gelenkpfanne abgewandten Außenflächen an einer Innenfläche der zugehörigen Aufnahmepartie anliegen. Diese hemmt dann ein Auseinanderbiegen der Zungen, so lange das Innenteil im Schalenteil aufgenommen ist. Der die Stirnseite der Aufnahmepartie hintergreifende Rand wird dann vorzugsweise dadurch gebildet, dass die Zungen jeweils einen radial nach außen gebogenen Endabschnitt aufweisen, wobei die Endabschnitte die Stirnseite der zugehörigen Aufnahmepartie hintergreifen. Eine einfache und kostengünstige Fertigung der Innenteile wird zweckmäßig dadurch erzielt, dass diese einstückig und vorzugsweise aus Kunststoff gefertigt sind.

Es ist jedoch auch möglich, dass die Innenteile gemäß einem zweiten bevorzugten Ausführungsbeispiel mehrstückig sind mit mindestens zwei Stücken, die zur Aufweitung der Einführöffnung voneinander trennbar sind. Diese müssen nicht lösbar miteinander verbunden sein, sondern können lose aneinander gefügt sein und vom Schalenteil zusammengehalten werden, was den Aufbau des Innenteils vereinfacht.

Die lösbare Befestigung der Innenteile an den Schalenteilen kann auf verschiedene Weise hergestellt werden. Es ist möglich, dass die Innenteile jeweils mindestens zwei Rastzungen aufweisen, die entgegen der Rohrlängsrichtung vorstehen, und die an ihren freien Enden jeweils einen eine Rastfläche am zugehörigen Schalenteil hintergreifenden, radial abstehenden Rasthaken tragen. Eine solche Rastverbindung ist einfach zu lösen und bietet in den meisten Fällen eine hinreichende Stabilität. Es ist jedoch auch möglich, dass die Innenteile an den Schalenteilen jeweils mittels eines Befestigungsstifts befestigt sind, der quer zur Rohrlängsrichtung durch jeweils eine Durchführöffnung im Innenteil und im zugehörigen Schalenteil durchgeführt ist. Dabei ist es möglich, dass die Befestigungsstifte jeweils außerhalb der Gelenkpfanne durch das betreffende Innenteil durchgeführt sind. Es ist jedoch auch möglich, die Befestigungsstifte durch die Gelenkpfannen durchzuführen, wobei die Befestigungsstifte dann jeweils durch eine weitere Durchführöffnung im jeweiligen Gelenkkopf durchgeführt sind. Um hierdurch die Gelenkigkeit des Führungsrohrs nicht einzuschränken, wird bevorzugt, dass die weiteren Durchführöffnungen jeweils einen Durchmesser aufweisen, der in ihrer Mitte dem Durchmesser des zugehörigen Befestigungsstifts entspricht und sich zu den Enden der weiteren Durchführöffnung hin vergrößert.

Die Schalenteile weisen zweckmäßig jeweils eine den Führungskanal durchspannende und die Außenschale mit dem Gelenkhals verbindende Stützstrebe auf. Dabei wird bevorzugt, dass die Befestigungsstifte jeweils durch eine der Stützstreben durchgeführt sind. Auch die Schalenteile können vorteilhaft einstückig, insbesondere aus Kunststoff, gefertigt sein. Insbesondere wird bevorzugt, dass die Gelenkköpfe und die Gelenkhälse einstückig miteinander verbunden sind.

Um ein Herausfallen der Befestigungsstifte und damit ein Herauslösen der Innenteile aus den Schalenteilen im Betrieb zu vermeiden, sind die Befestigungsstifte zweckmäßig jeweils in den Schalenteilen zwischen einer Halteposition, in der sie durch die Durchführöffnungen der Innenteile durchgeführt sind, und einer Löseposition verschieblich, in der sie nicht in die Durchführöffnungen der Innenteile eingreifen. Dabei wird bevorzugt, dass die Befestigungsstifte von der Halteposition in die Löseposition unter Überwindung einer Rückhaltekraft verschieblich sind.

Im Folgenden wird die Erfindung anhand von drei in der Zeichnung schematisch dargestellten Ausführungsbeispielen näher erläutert. Es zeigen
- Fig. 1: ein aus mehreren Rohrsegmenten zusammengesetztes Führungsrohr in perspektivischer Ansicht;
- Fig. 2a, 2b: ein Schalenteil eines Rohrsegments gemäß einem ersten Ausführungsbeispiel in perspektivischer Ansicht und im Längsschnitt;
- Fig. 3: ein Innenteil eines Rohrsegments gemäß einem ersten Ausführungsbeispiels in Seitenansicht;
- Fig. 4a, 4b: zwei gelenkig miteinander verbundene Rohrsegmente gemäß dem ersten Ausführungsbeispiel im Längsschnitt in zwei verschiedenen Darstellungen;
- Fig. 5: zwei gelenkig miteinander verbundene Rohrsegmente gemäß einem zweiten Ausführungsbeispiel im Längsschnitt;
- Fig. 6a, 6b, 6c: Detaildarstellungen des Schalenteils gemäß dem zweiten Ausführungsbeispiel;
- Fig. 7: zwei gelenkig miteinander verbundene Rohrsegmente gemäß einer Variante des zweiten Ausführungsbeispiels im Längsschnitt und
- Fig. 8: einen Abschnitt eines Führungsrohrs gemäß einem dritten Ausführungsbeispiel.

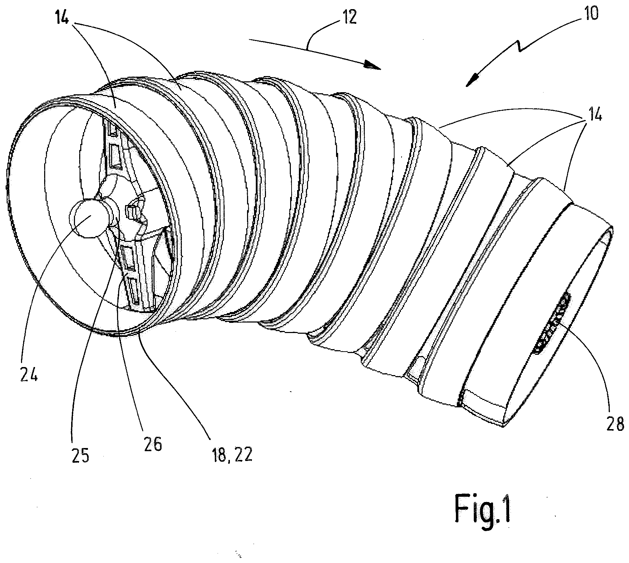

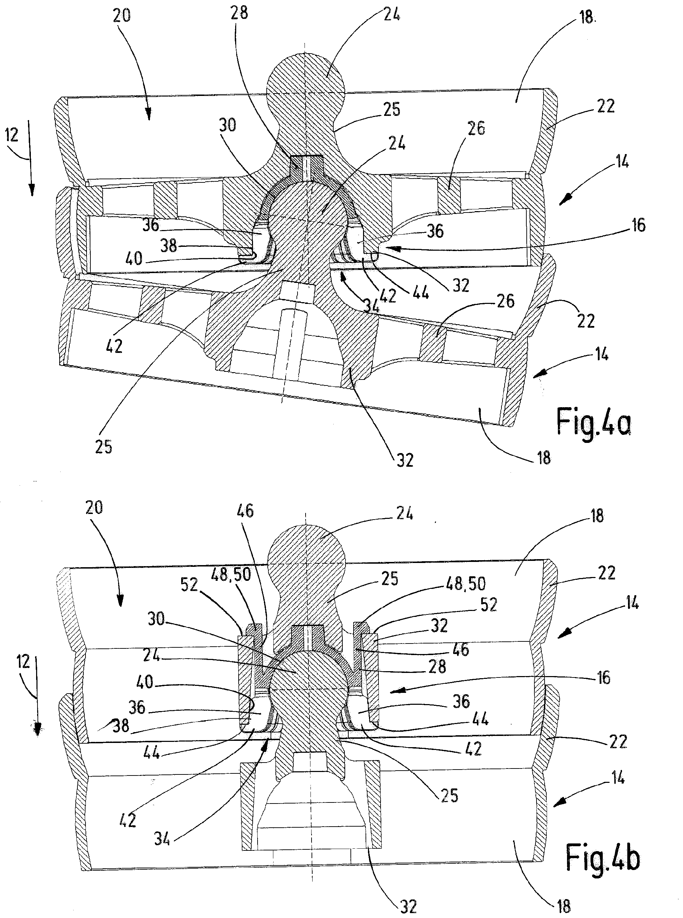

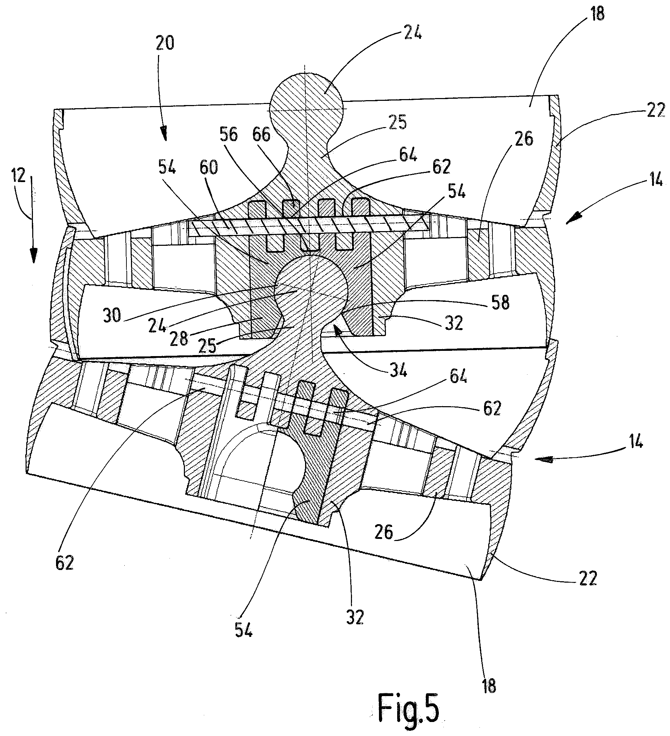

Das in Fig. 1 dargestellte Führungsrohr 10 weist eine Vielzahl von in einer Rohrlängsrichtung 12 aneinander gereihten Rohrsegmenten 14 auf, die mittels Kugelgelenken 16 gelenkig miteinander verbunden sind. Bei jedem der gezeigten Ausführungsbeispiele weist jedes der Rohrsegmente 14 ein Schalenteil 18 auf, das eine einen Führungskanal 20 für die Aufnahme von Leitungen abschnittsweise rings umschließende Außenschale 22 aufweist. Die Außenschalen 22 überlappen einander, so dass auch beim Verschwenken der Rohrsegmente 14 gegeneinander der Führungskanal 20 geschlossen bleibt, wie in Fig. 4a und Fig. 5 gezeigt. Das Schalenteil 18 weist zudem jeweils einen Gelenkkopf 24 auf, der am freien Ende eines sich entgegen der Rohrlängsrichtung 12 erstreckenden Gelenkhalses 25 angeordnet ist und mittels einer den Führungskanal 20 durchspannenden den Gelenkhals 25 tragenden Stützstrebe 26 mit der Außenschale 22 verbunden ist. Zudem weist bei allen gezeigten Ausführungsbeispielen jedes Rohrsegment 14 ein Innenteil 28 auf, das die Gelenkpfanne 30 eines der Kugelgelenke 16 aufweist. Das Innenteil 28 ist jeweils in einer Aufnahmepartie 32 des zugehörigen Schalenteils 18 aufgenommen und lösbar mit diesem verbunden. Es weist zudem eine Einführöffnung 34 auf, über die der zugehörige Gelenkkopf 24 in die Gelenkpfanne 30 eingeführt werden kann, die einen kleineren Durchmesser aufweist als der Gelenkkopf 24 selbst und durch die der Gelenkhals 25 in der Rohrlängsrichtung 12 durchgeführt ist. Bei den ersten beiden Ausführungsbeispielen verhindert die Aufnahmepartie 32 ein Aufweiten der Einführöffnung 34, so lange das Innenteil 28 im Schalenteil 18 aufgenommen ist, so dass in dieser Halteposition der Gelenkkopf 24 nicht aus der Gelenkpfanne gelöst werden kann.

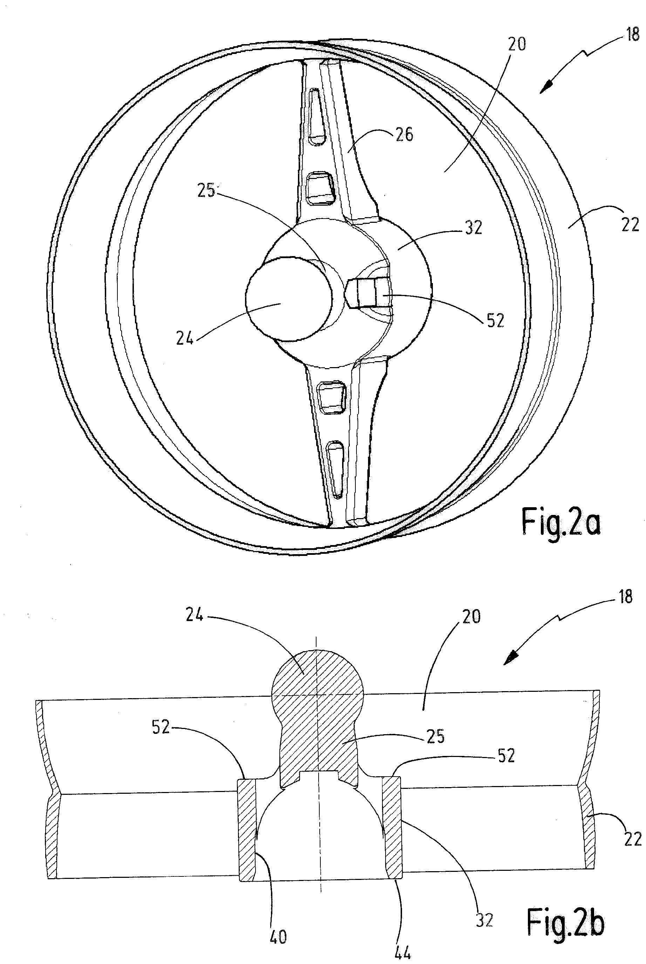

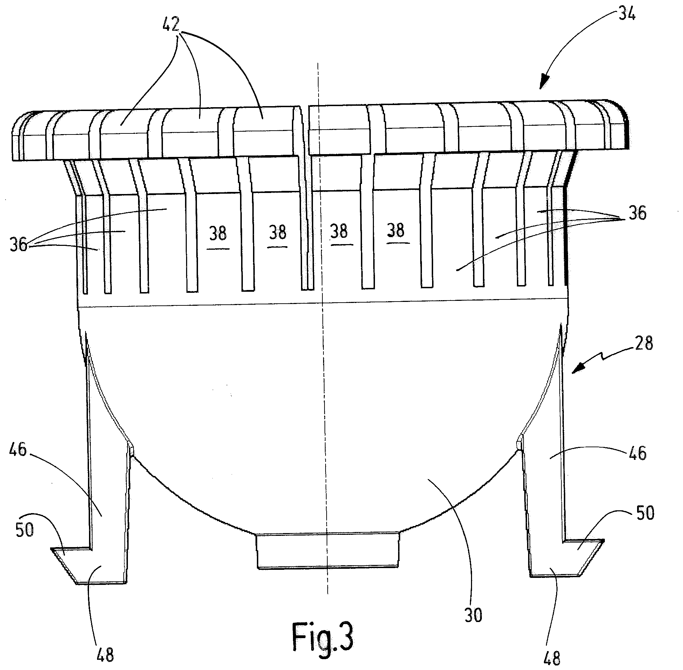

Beim ersten Ausführungsbeispiel (Fig. 2a bis 4b) weist jedes Innenteil 28 sich von der Gelenkpfanne 30 aus in der Rohrlängsrichtung 12 erstreckende, die Einführöffnung 34 rings umschließende, elastisch biegsame Zungen 36 auf. Die Zungen 36 verengen die Einführöffnung 34 in der oben beschriebenen Weise und bilden somit Haltemittel, die den Gelenkkopf 24 in der Gelenkpfanne 30 halten. Sie liegen mit ihren Außenflächen 38 an einer Innenfläche 40 der zugehörigen Aufnahmepartie 32 an, welche somit ein Aufweiten der Einführöffnung 34 verhindert. Wird das Innenteil 28 aus dem Schalenteil 18 herausgenommen, so kann der in seiner Gelenkpfanne 30 aufgenommene Gelenkkopf 24 leicht herausgezogen werden, wobei die Zungen 36 unter Aufweitung der Einführöffnung 34 nach außen gebogen werden. Die Zungen 36 weisen zudem Endabschnitte 42 auf, die radial nach außen gebogen sind und somit einen Rand bilden, der eine in Rohrlängsrichtung 12 weisende Stirnseite 44 der Aufnahmepartie 32 hintergreift, so dass das Innenteil 28 gegenüber dem Schalenteil 18 nicht entgegen der Rohrlängsrichtung 12 bewegt werden kann.

Zur Befestigung am zugehörigen Schalenteil 18 weisen die Innenteile 28 beim ersten Ausführungsbeispiel jeweils zwei sich entgegen der Rohrlängsrichtung 12 erstreckende Rastzungen 46 auf, die an ihren freien Enden 48 jeweils einen radial nach außen weisenden Rasthaken 50 tragen. Jeder der Rasthaken 50 hintergreift eine entgegen der Rohrlängsrichtung 12 weisende Rastfläche 52 der Aufnahmepartie 32, so dass das im Schalenteil 18 aufgenommene Innenteil 28 nicht in Rohrlängsrichtung 12 beweglich ist. Zum Lösen der Verbindung werden die freien Enden 48 der einander diametral gegenüberliegenden Rastzungen 46 nach innen gedrückt, bis die Rastverbindung gelöst wird.

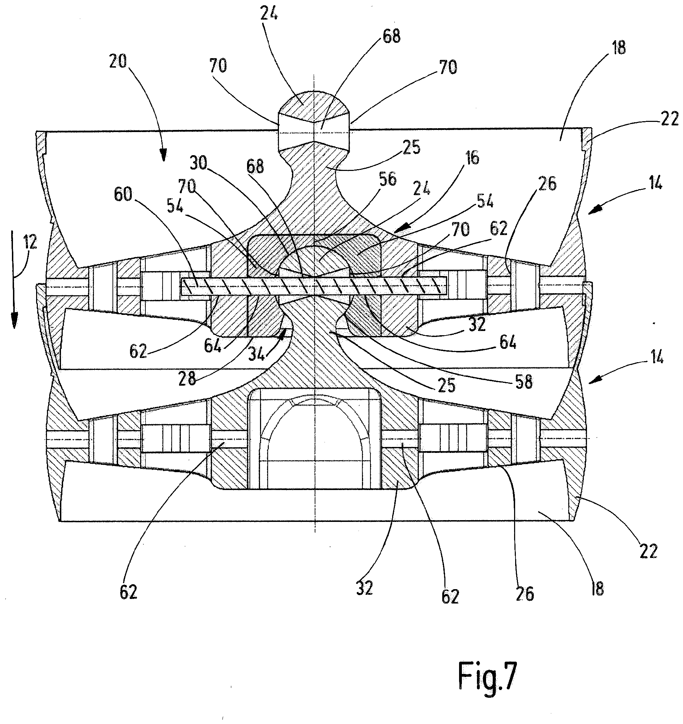

Bei beiden Varianten des zweiten Ausführungsbeispiels (Fig. 5, 7) erfolgt sowohl die Verankerung des Gelenkkopfs 24 in der Gelenkpfanne 30 als auch die Befestigung des Innenteils 28 am Schalenteil 18 mit anderen Mitteln. Die Innenteile 28 sind jeweils zweistückig ausgebildet mit zwei Hälften 54, die an einer Trennstelle 56 lose aneinander liegen. Sie sind zudem passgenau in der Aufnahmepartie 32 aufgenommen, so dass sie auch ohne weitere Verbindungsmittel zusammengehalten werden. Die Einführöffnung 34 ist durch einen umlaufenden Vorsprung 58 verengt, der somit als Haltemittel wirkt, so dass der in der Gelenkpfanne 30 aufgenommene Gelenkkopf 24 in der in Fig. 5, 7 gezeigten Halteposition nicht herausgezogen werden kann. Eine Aufweitung der Einführöffnung 34 zur Entnahme des Gelenkkopfs 24 erfolgt, indem das Innenteil 28 aus der Aufnahmepartie 32 herausgenommen wird und die beiden Hälften 54 voneinander getrennt werden. Die Befestigung des Innenteils 28 im Schalenteil 18 erfolgt mittels eines Befestigungsstifts 60, der durch eine Durchführöffnung 62 im Schalenteil 18, welche durch die Stützstrebe 26 verläuft, und durch eine Durchtrittsöffnung 64 im Innenteil 28 durchgeführt wird. Bei der ersten Variante des zweiten Ausführungsbeispiels gemäß Fig. 5 verläuft die Durchführöffnung 64 des Innenteils 28 durch einen sich von der Gelenkpfanne 30 entgegen der Rohrlängsrichtung 12 erstreckenden Fortsatz 66, der im Schnitt, wie in Fig. 5 gezeigt, kammförmig ist und in eine im Schnitt ebenfalls kammförmige Kontur in der Aufnahmepartie 32 des Schalenteils 18 eingreift. In Fig. 5 ist zur Veranschaulichung beim unteren Rohrsegment 14 nur eine Hälfte 54 des Innenteils 28 dargestellt. Bei der zweiten Variante des zweiten Ausführungsbeispiels gemäß Fig. 7 verläuft die Durchführöffnung 64 des Innenteils mitten durch die Gelenkpfanne 30 und damit auch durch den in ihr aufgenommenen Gelenkkopf 24, der hierfür eine weitere Durchführöffnung 68 aufweist. Diese weist in ihrer Mitte einen etwa dem Durchmesser des Befestigungsstifts 60 entsprechenden Durchmesser auf und weitet sich zu ihren beiden Enden 70 hin auf, um ein Verdrehen des Gelenkkopfs 24 in der Gelenkpfanne 30 zu ermöglichen.

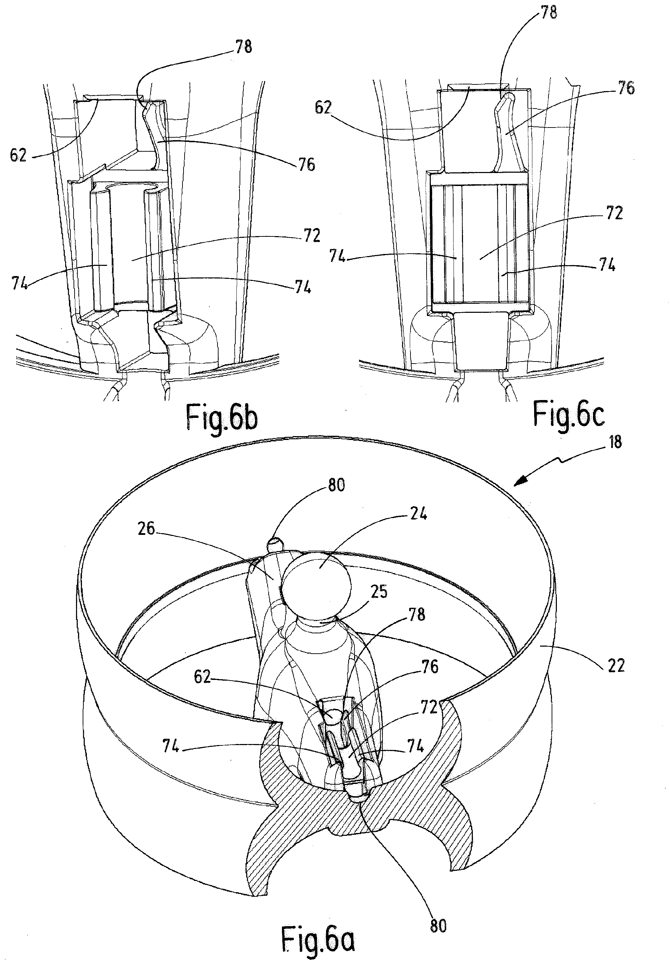

In Fig. 6a bis 6c ist dargestellt, wie der Befestigungsstift 60 unverlierbar in einem Schalenteil 18 aufgenommen werden kann. Die Darstellung gemäß Fig. 6a bis 6c bezieht sich dabei auf die erste Variante des zweiten Ausführungsbeispiels. Die dargestellte unverlierbare Aufnahme des Befestigungsstifts 60 im Schalenteil 18 wird jedoch auch bei der zweiten Variante des zweiten Ausführungsbeispiels gemäß Fig. 7 bevorzugt. Die Stützstrebe 26 weist an einem ihrer Arme eine entgegen der Rohrlängsrichtung 12 offene Einsetzöffnung 72 für den Befestigungsstift 60 auf. Die Einsetzöffnung 72 ist durch zwei einander gegenüberliegende, elastisch verformbare Rastelemente 74 auf eine Breite verengt, die etwas kleiner ist als die Dicke des Befestigungsstifts 60. Der Befestigungsstift 60 muss daher unter Kraftaufwand in die Einsetzöffnung 72 durch Auseinanderbiegen der Rastelemente 74 eingesetzt werden und kann aus dieser auch nur unter Kraftaufwand und durch Auseinanderbiegen der Rastelemente 74 wieder entnommen werden. Von der Einsetzöffnung 72 wird der Befestigungsstift in die Durchführöffnung 64 geschoben, bis er an einem in der Zeichnung nicht dargestellten Endanschlag anliegt, der im Abstand zur Außenschale 22 im anderen Arm der Stützstrebe 26 angeordnet ist. In dieser Halteposition erstreckt sich der Befestigungsstift 60 vollständig durch die Durchführöffnungen 62, 64 und hält das Innenteil 28 im Schalenteil 18 fest. Beim Vorschieben des Befestigungsstifts 60 wird eine Rückhaltezunge 76 elastisch verformt, die sich, nachdem der Befestigungsstift 60 in die Halteposition gebracht wurde, wieder zurück verformt und einem Zurückschieben des Befestigungsstifts 60 eine Kraft entgegenbringt. An ihrem freien Ende ist die Rückhaltezunge 76 mit einer Auflaufschräge 78 versehen, an der der Befestigungsstift 60 beim Zurückschieben entlang gleitet und die Rückhaltezunge 76 verbiegt. Der Befestigungsstift 60 ist somit zwischen der Halteposition und einer Löseposition verschiebbar, wobei er in der Löseposition die Verbindung zwischen dem Schalenteil 18 und dem Innenteil 28 freigibt. Sowohl das Verschieben von der Löseposition in die Halteposition als auch das Verschieben von der Halteposition in die Löseposition erfolgt unter Überwindung einer Rückhaltekraft. Zum Verschieben sind in der Außenschale 22 jeweils Eingriffslöcher 80 angeordnet, die einander so diametral gegenüber liegen, dass sie jeweils in der Verlängerung der Durchführöffnung 64 liegen. Ihr Durchmesser ist kleiner als der Durchmesser des Befestigungsstifts 60, so dass dieser nicht durch sie hindurch rutschen kann, es einem Anwender aber ermöglicht wird, mit einem dünnen Stift durch sie durchzugreifen, um den Befestigungsstift 60 vorzuschieben. Auch der in der Zeichnung nicht dargestellte Anschlag im zweiten Arm der Stützstrebe 26 weist ein solches Eingriffsloch auf.

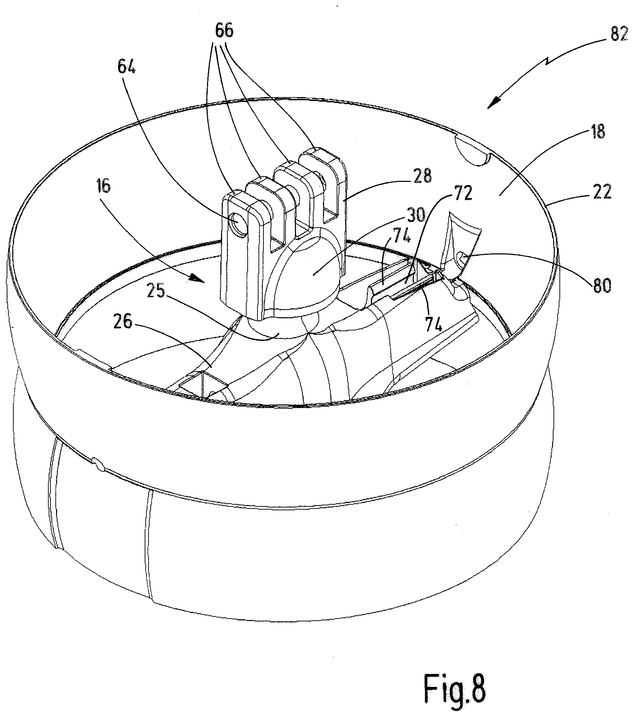

Beim dritten Ausführungsbeispiel gemäß Fig. 8 ist das Innenteil 28 starr ausgebildet, so dass die Einführöffnung 34 nicht aufgeweitet werden kann. Die Herstellung des Führungsrohrs 10 erfolgt mittels eines Zweikomponenten-Spritzgussverfahrens, wobei das Schalenteil 18 aus einer ersten Kunststoffkomponente und das Innenteil 28 aus einer zweiten Kunststoffkomponente hergestellt wird. Zur Herstellung eines Abschnitts 82, der aus einem Innenteil 28 und einem Schalenteil 18 des in Rohrlängsrichtung 12 folgenden Rohrsegments besteht, wird das fertige Schalenteil 18 unter Ausbildung des Innenteils 28 mit der zweiten Kunststoffkomponente umspritzt. Solchermaßen hergestellte Abschnitte 82 werden dann unter Ausbildung der Rohrsegmente 14 zum Führungsrohr 10 zusammengesetzt, indem die Innenteile 28 an den Schalenteilen 18 mittels Befestigungsstiften 60 fixiert werden. Insbesondere können die Befestigungsstifte 60 dann auch wie unter Bezugnahme auf Fig. 6a bis 6c beschrieben eingesetzt und zur Demontage wieder entnommen werden. Die beiden Kunststoffkomponenten sind dabei so gewählt, dass die zweite Kunststoffkomponente einen niedrigeren Schmelzpunkt aufweist als die erste Kunststoffkomponente, damit sich das Innenteil 28 und das Schalenteil 18 im Bereich des Kugelgelenks 16 nicht miteinander verbinden.

Zusammenfassend ist Folgendes festzuhalten: Die Erfindung betrifft ein Führungsrohr 10 zur Führung von Leitungen mit einer Vielzahl von gelenkig miteinander verbundenen Rohrsegmenten 14, die einen Führungskanal 20 zur Aufnahme der Leitungen umschließen, wobei jeweils zwei in einer Rohrlängsrichtung 12 aufeinanderfolgende Rohrsegmente 14 mittels eines Kugelgelenks 16 miteinander verbunden sind, wobei jedes Rohrsegment 14 einen Gelenkkopf 24, einen den Gelenkkopf 24 tragenden und fest mit ihm verbundenen Gelenkhals 25 sowie eine Gelenkpfanne 30 zur Aufnahme des Gelenkkopfs 24 des in Rohrlängsrichtung 12 folgenden Rohrsegments 14 aufweist und wobei der Durchmesser des Gelenkkopfs 24 jeweils größer ist als der Durchmesser des ihn tragenden Gelenkhalses 25. Erfindungsgemäß ist vorgesehen, dass jedes Rohrsegment 14 ein den Gelenkkopf 24, den Gelenkhals 25 und eine den Führungskanal 20 abschnittsweise umschließende Außenschale 22 aufweisendes Schalenteil 18 und ein im Schalenteil 18 aufgenommenes und lösbar an ihm fixiertes, die Gelenkpfanne 30 aufweisendes Innenteil 28 aufweist und dass das Innenteil 28 eine Einführöffnung 34 aufweist, deren Durchmesser kleiner ist als der Durchmesser des Gelenkkopfs 24 und durch die der Gelenkhals 25 des folgenden Rohrsegments 14 in der Rohrlängsrichtung 12 durchgeführt ist.

## Patentansprüche

1. Führungsrohr zur Führung von Leitungen mit einer Vielzahl von gelenkig miteinander verbundenen Rohrsegmenten (14), die einen Führungskanal (20) zur Aufnahme der Leitungen umschließen, wobei jeweils zwei in einer Rohrlängsrichtung (12) aufeinanderfolgende Rohrsegmente (14) mittels eines Kugelgelenks (16) miteinander verbunden sind, wobei jedes Rohrsegment (14) einen Gelenkkopf (24), einen den Gelenkkopf (24) tragenden Gelenkhals (25) sowie eine Gelenkpfanne (30) zur Aufnahme des Gelenkkopfs (24) des in Rohrlängsrichtung (12) folgenden Rohrsegments (14) aufweist und wobei der Durchmesser des Gelenkkopfs (24) jeweils größer ist als der Durchmesser des ihn tragenden Gelenkhalses (25), **dadurch gekennzeichnet, dass** jedes Rohrsegment (14) ein den Gelenkkopf (24), den Gelenkhals (25) und eine den Führungskanal (20) abschnittsweise umschließende Außenschale (22) aufweisendes Schalenteil (18) und ein im Schalenteil (18) aufgenommenes und lösbar an ihm fixiertes, die Gelenkpfanne (30) aufweisendes Innenteil (28) aufweist und dass das Innenteil (28) eine Einführöffnung (34) aufweist, deren Durchmesser kleiner ist als der Durchmesser des Gelenkkopfs (24) und durch die der Gelenkhals (25) des folgenden Rohrsegments (14) in der Rohrlängsrichtung (12) durchgeführt ist.

2. Führungsrohr nach Anspruch 1, **dadurch gekennzeichnet, dass** die Einführöffnungen (34) jeweils zum Ein- und Ausführen des Gelenkkopfs (24) des folgenden Rohrsegments (14) aufweitbar sind und dass die Innenteile (28) jeweils in einer Aufnahmepartie (32) des zugehörigen Schalenteils (18) aufgenommen sind, die eine Aufweitung der Einführöffnung (34) hemmt.

3. Führungsrohr nach Anspruch 2, **dadurch gekennzeichnet, dass** die Innenteile (28) jeweils einen nach außen überstehenden, eine Stirnseite (44) der Aufnahmepartie (32) hintergreifenden Rand (42) aufweisen.

4. Führungsrohr nach einem der vorangehenden Ansprüche, **dadurch gekennzeichnet, dass** die Innenteile (28) jeweils sich von der Gelenkpfanne (30) aus in Rohrlängsrichtung (12) erstreckende, die Einführöffnung (34) rings umschließende, elastisch biegsame Zungen (36) aufweisen.

5. Führungsrohr nach Anspruch 2 und nach Anspruch 4, **dadurch gekennzeichnet, dass** die Zungen (36) mit ihren der Gelenkpfanne (30) abgewandten Außenflächen (38) an einer Innenfläche (40) der zugehörigen Aufnahmepartie (32) anliegen.

6. Führungsrohr nach Anspruch 4 oder 5, **dadurch gekennzeichnet, dass** die Zungen (36) jeweils einen radial nach außen gebogenen Endabschnitt (42) aufweisen, wobei die Endabschnitte (42) die Stirnseite (44) der zugehörigen Aufnahmepartie (32) hintergreifen.

7. Führungsrohr nach einem der vorangehenden Ansprüche, **dadurch gekennzeichnet, dass** die Innenteile (28) jeweils mindestens zwei Rastzungen (46) aufweisen, die entgegen der Rohrlängsrichtung (12) vorstehen, und die an ihren freien Enden (48) jeweils einen eine Rastfläche (52) am zugehörigen Schalenteil (18) hintergreifenden, radial abstehenden Rasthaken (50) tragen.

8. Führungsrohr nach einem der Ansprüche 1 bis 6, **dadurch gekennzeichnet, dass** die Innenteile (28) an den Schalenteilen (18) jeweils mittels eines Befestigungsstifts (60) befestigt sind, der quer zur Rohrlängsrichtung (12) durch jeweils eine Durchführöffnung (62, 64) im Innenteil (28) und im zugehörigen Schalenteil (18) durchgeführt ist.

9. Führungsrohr nach Anspruch 8, **dadurch gekennzeichnet, dass** die Befestigungsstifte (60) jeweils durch eine weitere Durchführöffnung (68) im jeweiligen Gelenkkopf (24) durchgeführt sind.

10. Führungsrohr nach Anspruch 9, **dadurch gekennzeichnet, dass** die weiteren Durchführöffnungen (68) jeweils einen Durchmesser aufweisen, der in ihrer Mitte dem Durchmesser des zugehörigen Befestigungsstifts (60) entspricht und sich zu ihren Enden hin vergrößert.

11. Führungsrohr nach einem der Ansprüche 8 bis 10, **dadurch gekennzeichnet, dass** die Schalenteile (18) jeweils eine den Führungskanal (20) durchspannende und die Außenschale (22) mit dem Gelenkhals (24) verbindende Stützstrebe (26) aufweisen und dass die Befestigungsstifte (60) jeweils durch eine der Stützstreben (26) durchgeführt sind.

12. Führungsrohr nach einem der Ansprüche 8 bis 11, **dadurch gekennzeichnet, dass** die Befestigungsstifte (60) jeweils in den Schalenteilen (18) zwischen einer Halteposition, in der sie durch die Durchführöffnungen (64) der Innenteile (28) durchgeführt sind, und einer Löseposition verschieblich sind, in der sie nicht in die Durchführöffnungen der Innenteile (28) eingreifen.

13. Führungsrohr nach Anspruch 12, **dadurch gekennzeichnet, dass** die Befestigungsstifte (60) von der Halteposition in die Löseposition unter Überwindung einer Rückhaltekraft verschieblich sind.

14. Verfahren zur Herstellung eines Führungsrohrs (10) nach Anspruch 1, wobei die Innenteile (28) jeweils starr sind, wobei in einem ersten Verfahrensschritt Abschnitte (82) des Führungsrohrs (10) bestehend aus dem Innenteil (28) eines ersten Rohrsegments (14) und dem Schalenteil (18) eines in Rohrlängsrichtung (12) folgenden zweiten Rohrsegments (14) hergestellt werden, indem der Gelenkkopf (24) des zweiten Rohrsegments (14) in einem Spritzgussprozess mit einem das Innenteil (28) des ersten Rohrsegments (14) bildenden Kunststoff unter Ausbildung eines der Kugelgelenke (16) umspritzt wird und wobei in einem zweiten Verfahrensschritt die Abschnitte (82) durch Einsetzen der Innenteile (28) in die Schalenteile (18) und Fixieren an den Schalenteilen (18) zusammengesetzt werden.

15. Verfahren nach Anspruch 14, **dadurch gekennzeichnet, dass** der die Innenteile (28) bildende Kunststoff einen niedrigeren Schmelzpunkt aufweist als der Kunststoff, aus dem die Gelenkköpfe (24) gefertigt sind.
